# EUROPEAN PATENT SPECIFICATION

(11) **EP 2 155 555 B1**
(45) Date of publication and mention of the grant of the patent: **10.08.2016**
(21) Application number: 08767057.6
(22) Date of filing: 09.06.2008
(51) Int. Cl.: B64D 27/26, F02C 7/20

(54) **A MOUNTING ELEMENT FOR A GAS TURBINE ENGINE, AND A STRUCTURE AND AN AIRCRAFT WITH SUCH A MOUNTING ELEMENT**
MONTAGEELEMENT FÜR EINEN GASTURBINENMOTOR SOWIE STRUKTUR UND FLUGZEUG MIT EINEM SOLCHEN MONTAGEELEMENT
ELEMENT DE MONTAGE POUR MOTEUR DE TURBINE A GAZ ET STRUCTURE ET AERONEF COMPORTANT UN TEL ELEMENT DE MONTAGE

(30) Priority: 08.06.2007 WO PCT/SE2007/000561
(43) Date of publication of application: 24.02.2010
(73) Proprietor: GKN Aerospace Sweden AB, 461 81 Trollhättan (SE)
(72) Inventor: SVENSSON, Jan-Erik, S-411 25 Göteborg (SE); SJÖQVIST, Roger, S-461 55 Trollhättan (SE)
(74) Representative: D Young & Co LLP
(86) International application number: PCT/SE2008/000384
(87) International publication number: WO 2008/150213

(56) References cited:
- EP-A2- 1 010 878
- EP-A2- 1 013 896
- EP-A2- 1 498 617
- WO-A1-2007/064388
- US-A- 4 193 741
- US-A- 4 289 060
- US-A- 4 289 061
- US-A1- 2006 012 091

## Description

### TECHNICAL FIELD

The present invention relates to a mounting element for transferring loads between a gas turbine engine and an airframe, the mounting element presenting a cylindrical hole for receiving a fastening element, such as a pin or a bolt. The invention also relates to a structure comprising such a mounting element, as well as an aircraft comprising such a mounting element.

### BACKGROUND

Aircraft gas turbine engines are attached to an associated part of the airframe by engine mounts, which transmit loads such as engine torque and thrust to the airframe. Traditionally, such engine mounts and other structural components are designed considering ultimate loads, which could be dependent on extraordinary operational conditions, such as in a "blade off" situation. The latter refers to the extremely unusual event where the fan, the compressor or the turbine in the engine during rotation sheds one or more blades, resulting in large oscillating loads on the structural components.

A number of solutions for engine mounts have been suggested taking ultimate loads into consideration. One obvious solution is to provide the structure for the engine, including the engine mounts, as elements sized of the worst case, e.g. blade off, scenario. However, this means designing the engine structure for a very unusual case, but not optimized for normal operational conditions. In the latter, thermal loads are important contributors to stresses. The solid structure designed for the worst case will present relatively large dimensions, which will increase not only the mechanical stiffness and strength, but also thermal gradients, leading to increased stresses during normal operational conditions. In turn, this will reduce the low cycle fatigue (LFC) life of the structure. Particularly, such designs might present cracks before the desired life has been reached, resulting in costly weld repairs or replacement. Also, such a structure sized of the worst case will result in extra weight carried in the air for an unlikely event. The patent application publication US2006/001209 IA1 presents an engine mount with a load bearing spring link mount for normal operational conditions, including two beams joined at their ends, and each joined at the respective mid-point to a respective of the engine and the airframe. The engine mount also presents, for a blade off condition, stiffening means including stacks of washers located coaxial about a bolt extending from one of the beams through a hole in the other beam. However, the engine mounts of said publication provide additional components (including the beams and stacks of washers) between the engine and the airframe, which are space consuming, adds weight, and lead to further details to be taken into account in safety considerations.

US 4,289,060 discloses a mounting element which has a first mode and a second mode for transferring loads between components, in which the second mode loads are transferred rigidly and inflexibly between the structures.

### SUMMARY OF THE INVENTION

It is an object of the invention to increase the payload capacity of an aircraft powered by one or more gas turbine engines.

Another object of the invention is to increase the life of structural components related to gas turbine engines.

A further object of the invention is to reduce maintenance of structural components related to gas turbine engines.

These objects are reached by a first aspect of the invention presenting a mounting element according to claim 1.

Surrounding the hole, and being adapted two operate in a first mode, and to operate, upon a collapse of the collapsible element, in a second mode, in which the stiffness of the mounting element is lower than in the first mode, such that reactive forces in the gas turbine engine are reduced in the second mode.

The hole for receiving the fastening element is preferably oriented such that the mounting element is adapted to carry loads, at least in the second mode, substantially perpendicularly to the axis of the hole.

As exemplified below, the collapsible element can be adapted to collapse by breaking and/or by plastic deformation, or by any other kind of process, eliminating or changing the load carrying capacity of the collapsible element. As also exemplified below, the mounting element can comprise one or a plurality of collapsible elements.

The reduced stiffness of the mounting element in the second mode leads to a reduced spring coefficient of the mounting element during extreme conditions, such as in a blade off situation with rotating loads, so as to considerably reduce the reactive forces in the structure in the engine and in bearings and rotating parts of the engine. Also, the loads transferred to the airframe will be considerably lower than in the case of solid engine mounts.

The invention allows for the collapsible element to be designed to carry loads in an un-collapsed state only up to a threshold load, being considerably lower than loads in a blade off situation. The reduced reactive forces in the second mode, obtained by the reduced stiffness of the mounting element, allows for large portions of, or the entire engine structure to be designed with considerable smaller dimensions, which in turn decreases the weight of an aircraft on which the engine is provided, and this will allow the payload capacity of the aircraft to be increased.

The dimensions can also be kept small, and the weight can be kept low, since the collapsible element surrounds the hole. More specifically, the collapsible element surrounding the hole provides for a very compact arrangement, which is specifically advantageous in aircraft gas turbine engine mount applications, where the available space is often very limited.

Also, the reduced dimensions of the engine structure results in less material needed for its manufacture, which reduces costs in connection thereto.

In addition, the reduced dimensions of portions of, or the entire engine structure will reduce thermal gradients, and this in combination with the reduced mechanical stiffness will reduce stresses during normal operational conditions. In turn, this will increase the low cycle fatigue (LCF) life of portions of, or the entire engine structure. For example, it will be possible to avoid cracks before the desired life has been reached. As a result, maintenance with weld repairs or replacement can be reduced, reducing the costs thereof.

Further, the collapsible element surrounding the hole makes it possible for the collapsible element to collapse as a result of any load which is perpendicular to the axis of the hole. Thereby, a large degree of independence of the load direction is achieved.

Preferably, a solid portion surrounds the collapsible element. Thereby, a further backup structure is provided in the mounting element in the case of a further failure in the second mode. Such a solid portion can advantageously be designed according to general structural dimensioning principles given for aircraft gas turbine engine mounting elements.

Preferably, the mounting element comprises a reduced stiffness element surrounding the hole, and being adapted to provide a load path in the second mode. Of course, as exemplified below, the mounting element can comprise one or a plurality of reduced stiffness elements.

Thereby, the mounting element can be adapted so as to provide in the first mode a first load path in the mounting element via the collapsible element, and to provide, upon the collapse of the collapsible element, a second load path in the mounting element via the reduced stiffness element. It should be noted that where such a new load path is provided in the second mode, it is provided locally within the mounting element.

The reduced stiffness element surrounding the hole contributes to the advantageously compact arrangement of the invention. Also, the reduced stiffness element surrounding the hole makes it possible for it to carry any load which is perpendicular to the axis of the hole. Thereby, a large degree of independence of the load direction is achieved.

The reduced stiffness element could be provided adjacent to or in the vicinity of the collapsible element.

Preferably, a solid portion surrounds the collapsible element and the reduced stiffness element. Similarly to what was mentioned above, this will provide a further backup structure in the mounting element in the case of a further failure, for example of the reduced stiffness element, in the second mode.

In preferred embodiments, the reduced stiffness element(s) provides a lower stiffness, i.e. a greater resiliency, than the collapsible element(s) by suitable choices of dimensions and/or material for the elements. For example, the reduced stiffness element(s) can be made in a material that has a lower stiffness, i.e. a greater resiliency, than that of the collapsible element(s), such as in a metal with a lower stiffness, a fibre-reinforced plastic material or a rubber-like compound.

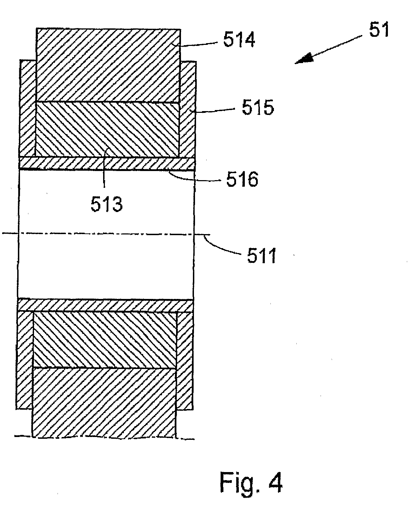

In alternative embodiments, exemplified below with reference to fig. 4, the collapsible element can provide a load path in the second mode, the stiffness of the collapsible element being lower in the second mode than in the first mode. Thereby, the collapsible element can be adapted to at least partially disintegrate. In such embodiments, preferably, the collapsible element comprises a brittle material.

The objects are also reached by a second aspect of the invention presenting a mounting element for transferring loads between a gas turbine engine and an airframe, the mounting element presenting a cylindrical hole for receiving a fastening element, such as a pin or a bolt, the mounting element comprising a collapsible element surrounding the hole, and being adapted to operate in a first mode, and to operate, upon a collapse of the collapsible element, in a second mode, in which the energy absorption capacity of the mounting element is higher than in the first mode, such that the loads in the airframe are reduced in the second mode.

The increased energy absorption capacity in the second mode will allow for energy from the engine, for example in a blade-off situation, to be absorbed by the mounting element, for example by converting the load energy to heat, thus preventing the energy absorbed to reach the airframe. This means that the loads will be reduced in structure between the mounting element and the airframe, as well as in the airframe, which, similarly to the first aspect of the invention will allow the structure to be designed with smaller dimensions, reducing the weight of the aircraft. Further, similarly to the case of reduced stiffness, the increased energy absorption of the mounting element in the second mode will considerably reduce the reactive forces in the structure for transferring loads between the engine and the airframe, as well as in the structure in the engine and in bearings and rotating parts of the engine, and this allows for the said load transferring structure and large portions of, or the entire engine structure to be designed with considerable smaller dimensions, which in turn decreases the weight of the aircraft. Also, as in the first aspect of the invention, the collapsible element surrounding the hole provides a very compact arrangement, and makes it possible for this element to collapse as a result of any load which is perpendicular to the axis of the hole. Thus, the first and second aspects of the invention provide alternative solutions to these particular problems. Nevertheless, features of the first and second aspects of the invention can be combined so that in addition to presenting an increased energy absorption capacity in the second mode, the mounting element can also be adapted to present a lower stiffness in the second mode.

Similarly to embodiments of the first aspect of the invention, in embodiments where the mounting element is adapted to present an increased energy absorption capacity in the second mode, a solid portion can surround the collapsible element.

In some embodiments the mounting element can comprise an energy absorbing element surrounding the hole, and being adapted to provide a load path in the second mode. The energy absorbing element can for example be an elastomeric damper presenting a high damper constant, i.e. considerably higher than that of the mounting element in the first mode. Thereby it will be adapted to absorb energy from the engine, thus preventing the energy absorbed to reach the airframe, and thus reducing the reactive forces in the structure for transferring loads between the engine and the airframe, and in the engine structure. For example, the energy absorbing element(s) can be made in a material that has a higher energy absorption capacity, than that of the collapsible element(s), such as in a fibre-reinforced plastic material or a rubber-like compound. As a matter of fact many materials provide features of both the first and the second aspect of the invention in that they provide both reduced stiffness and increased energy absorption in the second mode. Thus, in embodiments where the mounting element is adapted to present an increased energy absorption capacity as well as a lower stiffness in the second mode, the energy absorbing element can be identical to the reduced stiffness element described above.

The energy absorbing element is advantageously provided adjacent to or in the vicinity of the collapsible element. Preferably, a solid portion surrounds the collapsible element and the energy absorbing element.

As an alternative to providing an energy absorbing element, the collapsible element can provide a load path in the second mode, the energy absorption capacity of the collapsible element being higher in the second mode than in the first mode. Thereby, the collapsible element can be adapted to at least partially disintegrate, and specifically, the collapsible element can comprise a brittle material, which presents an increased energy absorption capacity when disintegrated.

A third aspect of the invention provides a structure for transferring loads between a gas turbine engine and an airframe, the structure comprising a mounting element according to any one of the claims 1-12, the structure further comprising an auxiliary load transferring element adapted to provide in the second mode a further load path for transferring loads between the gas turbine engine and the airframe. The auxiliary load transferring element can for example be similar to what in the art is referred to as a fail-safe engine mount lug, which is provided in traditional structures as a back-up engine mount unit for the case of failure of another engine mount lug. However, according to the third aspect of the invention, where any of the mounting elements operate in the second mode, the auxiliary load transferring element provides in addition to the mounting element a further load path for transferring loads between the gas turbine engine and the airframe. This will reduce the load, not only on the mounting element(s), but also portions of the engine structure, such as struts between outer casings and hubs, thereby making it possible to decrease the dimensions and the weight of such structure.

The objects above are also reached with an aircraft according to claim 14.

### DESCRIPTION OF THE FIGURES

Below, the invention will be described in detail with reference to the drawings, in which
- fig. 1 is a schematic partly sectioned view of a gas turbine engine mounted on a wing of an aircraft,
- fig. 2 shows schematically a part of the gas turbine engine in a view indicated by the line II-II in fig. 1,
- fig. 3 shows schematically a view of a mounting element of the part in fig. 2, sectioned along the line III-III in fig. 2,
- fig. 4 shows schematically a view of a mounting element of the part in fig. 2, sectioned along the line III-III in fig. 2, according to an alternative embodiment of the invention, and
- fig. 5 shows schematically a part of a gas turbine engine in a view corresponding to the one in fig. 2 with an arrangement according to a third aspect of the invention.

### DETAILED DESCRIPTION

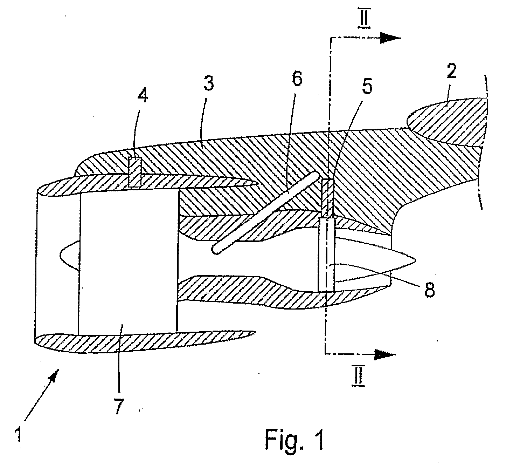

Fig. 1 shows schematically a partly sectioned view of a gas turbine engine 1 mounted on an airframe 2 of an aircraft, via a pylon 3, the airframe 2 being represented in fig. 1 by a portion of a wing. Of course, the invention is equally applicable to other arrangements of the engine in relation to the airframe, for example where the engine is mounted externally or internally of an aircraft fuselage, or on a vertical tail.

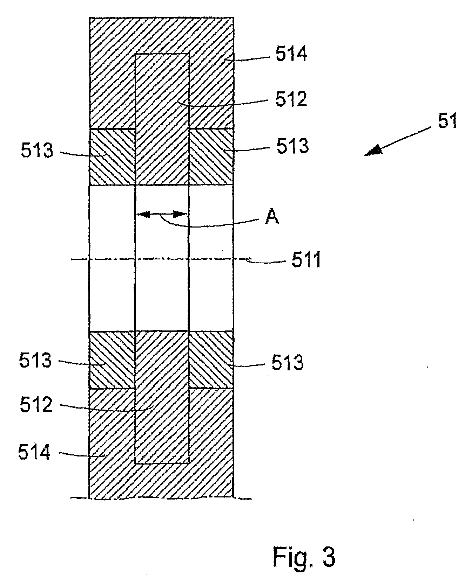

A structure for transferring loads between the engine 1 and the airframe 2 comprises a forward and a rear mounting assembly 4, 5, by means of which the engine 1 is mounted on the pylon 3, and also thrust bars 6, (one of which is shown in fig. 1), by means of which a further connection between the engine 1 and the pylon 3 is provided. Further load transferring structure components, such as torsion carrying engine mounts, can be provided between the engine 1 and the airframe 2, but they are not described further here. The forward mounting assembly 4 comprises suspension links (not shown in detail) connected at their upper ends to the pylon 3 and at their lower ends to a fan casing 7 of the engine 1. The rear mounting assembly 5 comprises a fastening device (not shown) connected to the pylon 3, suspension links (not shown in detail) connected at their upper ends to the fastening device and at their lower ends to mounting elements 51, described further below with reference to fig. 3 and 4 and fixedly connected to a turbine rear frame 8, located behind the turbine of the engine 1.

It should be noted that alternative arrangements for the engine mounting are of course possible. For example, the rear mounting assembly 5 could comprise suspension links connected to a frame located between a high pressure turbine and a low pressure turbine of the engine 1.

The structure 4, 5, 6 for transferring loads between the engine 1 and the airframe 2 comprises the mounting elements 51 described below with reference to fig. 3 and 4.

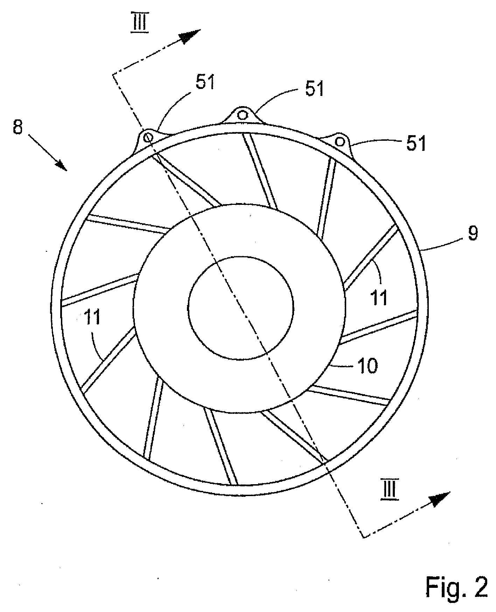

Fig. 2 shows schematically the turbine rear frame 8 in a view indicated by the line II-II in fig. 1. The turbine rear frame 8 comprises an outer casing 9, which has an annular shape, but of course alternative shapes can be allowed, for example polygonal. The outer casing 9 is connected to a central hub 10 via a plurality of struts 11. On an upper external portion of the outer casing, three mounting elements 51, in the form of lugs 51, are fixedly connected the outer casing 9, and are adapted to form parts of the rear mounting assembly 5 in that the suspension links (not shown) are to be connected at their lower ends to the lugs 51, by means of respective pins or bolts through cylindrical holes in the respective lugs 51. It should be noted that in alternative embodiments, for example in connection to engines carried on or inside the fuselage of an aircraft, mounting elements can be provided at any suitable location, for example laterally or in a lower region of the engine.

Fig. 3 shows schematically a view of one of the lugs 51 located on the outer casing 9, and sectioned along the line III-III in fig. 2. In fig. 3, the central axis of the hole for mounting the lug to the suspension link is indicated with a broken line 511. The lug 51 comprises a reduced stiffness element 512, surrounding the hole 511 and extending in parallel to a central axis of the hole 511, as indicated by the double arrow A in fig 3, throughout a central portion of the lug 51. Two collapsible elements 513 surround the hole 511 and extend on respective sides of the reduced stiffness element 512 as seen in the direction of a central axis of the hole 511. Surrounding the collapsible elements 513 and the reduced stiffness element 512 is a solid framing portion 514, integrally formed with the outer casing 9. As an alternative, the solid framing portion 514 can be fastened to the outer casing 9 in a suitable manner, for example by bolting. As a further alternative, two solid framing portions 514 can be provided integrally formed with or fastened to the outer casing 9, and surrounding only a respective of the collapsible elements 513.

The collapsible elements 513 are preferably made of a solid material, and are adapted to provide a first load path for transferring loads from the engine 1 to the airframe 2 during normal operational conditions. Thus, the collapsible elements are designed to carry loads up to a threshold load, being considerably lower than an ultimate load, which takes extreme conditions, such as those occurring during a "blade off" situation (briefly discussed above), under consideration. As mentioned, the mounting element 51 according to the invention reduces reactive forces during such extreme conditions. Therefore, the dimensions of large portions of, or the entire engine structure can be reduced, whereby the weight carried by the aircraft is reduced considerably.

The reduced stiffness element 512 is preferably made of a material which has a modulus of elasticity which is lower than the modulus of elasticity of the material of the collapsible elements 513. For example, a rubber-like compound, a metal with a relatively low stiffness, or a fibre-reinforced plastic material could be used as material for the reduced stiffness element 512. The reduced stiffness element 512 is adapted to provide, as described below, a second load path from the engine 1 to the airframe 2 during extreme conditions, such as the blade off situation.

Preferably, the other lugs 51 (fig. 2) on the outer casing 9 are arranged in a manner similar to what has been described with reference to fig. 3. Also, the forward mounting assembly 4 (fig. 1) can comprise lugs 51 arranged in such a way.

By means of the collapsible elements 513, the mounting element 51 is adapted to operate in a first mode, in which normal operational conditions occur, in which the loads do not exceed the threshold load, and in which the first load path between the engine 1 and the airframe 2 is provided by the collapsible elements 513. Should the unlikely situation of a blade off event, or some other predefined ultimate load condition, occur, the loads will exceed the threshold load, and the collapsible elements 513 will collapse by being deformed plastically. Thereupon, in each lug 51 arranged as shown in fig. 3, a second load path between the engine 1 and the airframe 2 is provided by the respective reduced stiffness element 512, so that the mounting element 51 operates in a second mode.

Due to the resiliency of the reduced stiffness element (s) 512, in the second mode, the stiffness of the mounting element 51 is considerably lower than in the first mode. This will considerably reduce the reactive forces in the suspension link(s), and therefore loads transferred to the airframe 2 will be considerably lower than in the case of a solid engine mount. Also, the reduced stiffness of the mounting element 51 will considerably reduce the reactive forces within the engine structure as well.

It should be noted that the mounting element 51 can also be provided according to the second aspect of the invention, where it can present an energy absorbing element 512 surrounding the hole, and being adapted to provide a load path in the second mode. This energy absorbing element 512 may be arranged in the same manner as the reduced stiffness element 512 described above, and can present a high damper constant to absorb energy in the second mode.

Alternatives to the embodiment described above are possible. For example, the respective lug could comprise a collapsible element, extending throughout a central portion of the lug as seen in the direction of a central axis of the hole, and two reduced stiffness elements could extend on respective sides of the collapsible element as seen in the direction of a central axis of the hole.

As a further alternative, instead of the reduced stiffness element(s) being provided adjacent to the (respective) collapsible elements, the reduced stiffness element(s) could be provided in the vicinity of the (respective) collapsible element.

Fig. 4 shows schematically a view of one of the lugs 51 located on the outer casing 9, and sectioned along the line III-III in fig. 2, according to an alternative embodiment of the invention. The lug 51 comprises a collapsible element 513, surrounding the hole 511 and extending throughout a central portion of the lug 51 as seen in the direction of a central axis of the hole 511, and is delimited by a sleeve 515 on either side. Radially inwards of the collapsible element, a bushing 516 is provided and adapted to receive a pin or similar for connecting the lug 51 to a suspension link. Surrounding the collapsible element 513 is a solid framing portion 514.

The collapsible element 513 is preferably made of a solid, brittle material, for example a ceramic material. As in the embodiment described above, the collapsible element 513 is adapted to provide a load path for transferring loads from the engine 1 to the airframe 2 during normal operational conditions, without being permanently deformed or breaking.

By means of the collapsible element 513, the mounting element 51 is adapted to operate in a first mode, in which normal operational conditions occur, and in which the loads do not exceed a threshold load. Should the unlikely situation of a blade off event, or some other predefined ultimate load condition, occur, the loads will exceed the threshold load, and the collapsible element 513 will collapse by breaking and at least partly disintegrating. Thereupon, the disintegrated portion of the collapsible element 513 will provide a load path between the engine 1 and the airframe 2, so that the mounting element 51 operates in a second mode. The disintegrated portion of the collapsible element 513, taking a form similar to sand, will in the second mode provide a stiffness of the mounting element 51 which is considerably lower than in the first mode. As in the embodiment described above, this will considerably reduce the reactive forces in the suspension link(s), as well as in portions of, or in the entire engine structure.

In addition to providing a decreased stiffness in the second mode, the energy absorption capacity of the collapsible element 513 can be higher in the second mode than in the first mode.

Preferably, the other lugs 51 (fig. 2) on the outer casing 9 are arranged in a manner similar to what has been described with reference to fig. 4. Also, the forward mounting assembly 4 (fig. 1) can comprise lugs 51 arranged in such a way.

In alternative embodiments, the mounting element 51 could incorporate a combination of resilient elements as exemplified in fig. 3, and collapsible elements as exemplified in fig. 4.

In use, the mounting element 51 according to any embodiment is provided between the gas turbine engine 1 and the airframe 2. This means that the mounting element 51 according to any embodiment is located so as to provide a load path between the gas turbine engine 1 and the airframe 2. The mounting element 51 described above with reference to fig. 3 and fig. 4 is fixedly connected to the engine 1. It should be noted that in alternative embodiments, the mounting element 51 could be differently arranged in the structure for transferring loads between the engine 1 and the airframe 2, such as at the lower end of a suspension link connected at its upper ends to the pylon 3 and at its lower ends to a traditional, solid mounting device fixedly connected to the engine 1. In further alternatives, the mounting element 51 could be located at the upper end of such a suspension link, or on the pylon 3.

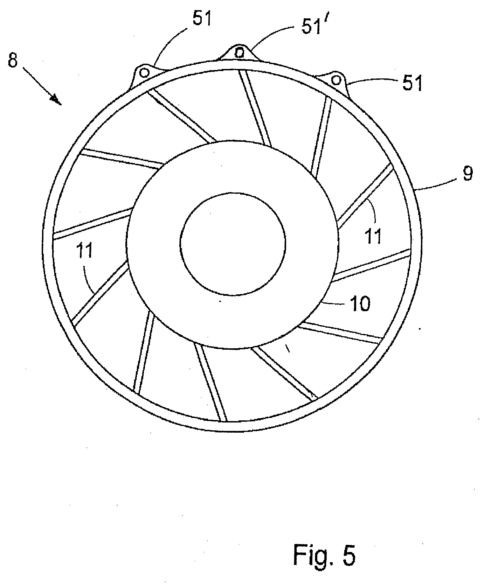

Referring to fig. 5, an embodiment of a third aspect of the invention will be presented. Fig. 5 shows similarly to fig. 2 the turbine rear frame 8 of an engine. As in the embodiments described above, the rear mounting assembly 5 comprises mounting elements 51, in this case two, fixedly connected to the turbine rear frame 8. These mounting elements can be arranged according to any embodiment presented above. Between the mounting elements 51 an auxiliary load transferring element 51' is provided. The auxiliary load transferring element 51' does not in this embodiment comprise any collapsible element. Instead it presents a hole which is elongated in the load transfer direction, i.e. vertically in fig. 5. Thereby, it is adapted to not transfer any loads in the first mode of the mounting elements 51, i.e. during normal operation. However, it adapted to provide in the second mode of any of the mounting elements 51, where much larger movements of the engine in relation to the airframe usually occur, a further load path for transferring loads between the engine and the airframe, thereby reducing the load on the mounting elements 51.

## Claims

1. A mounting element (51) for transferring loads between a gas turbine engine (1) and an airframe (2), the mounting element (51) presenting a cylindrical hole (511) for receiving a fastening element, such as a pin or a bolt, **characterized in that** it comprises a collapsible element (513) surrounding the hole (511), and **in that** it is adapted to operate in a first mode, and to operate, upon a collapse of the collapsible element (513), in a second mode, in which the stiffness of the mounting element (51) is lower than in the first mode, such that reactive forces in the gas turbine engine are reduced in the second mode.

2. A mounting element according to claim 1, comprising a solid portion (514) surrounding the collapsible element (513).

3. A mounting element according to any one of the claims 1-2, comprising a reduced stiffness element (512) surrounding the hole (511), and being adapted to provide a load path in the second mode.

4. A mounting element according to claim 3, wherein the reduced stiffness element (512) is provided adjacent to or in the vicinity of the collapsible element (513).

5. A mounting element according to any one of the claims 3-4, comprising a solid portion (514) surrounding the collapsible element (513) and the reduced stiffness element (512).

6. A mounting element according to any of the preceding claims, wherein the collapsible element (513) provides a load path in the second mode, the stiffness of the collapsible element (513) being lower in the second mode than in the first mode.

7. A mounting element according to claim 6, wherein the collapsible element (513) is adapted to at least partially disintegrate.

8. A mounting element according to claim 7, wherein the collapsible element (513) comprises a brittle material.

9. A mounting element (51) for transferring loads between a gas turbine engine (1) and an airframe (2), the mounting element (51) presenting a cylindrical hole (511) for receiving a fastening element, such as a pin or a bolt, **characterized in that** it comprises a collapsible element (513) surrounding the hole (511), and **in that** it is adapted to operate in a first mode, and to operate, upon a collapse of the collapsible element (513), in a second mode, in which the energy absorption capacity of the mounting element (51) is higher than in the first mode, such that the loads in the airframe are reduced in the second mode.

10. A mounting element according to claim 9, comprising a solid portion (514) surrounding the collapsible element (513).

11. A mounting element according to any one of the claims 9-10, comprising an energy absorbing element (512) surrounding the hole (511), and being adapted to provide a load path in the second mode.

12. A mounting element according to any one of the claims 9-11, wherein the collapsible element (513) provides a load path in the second mode, the energy absorption capacity of the collapsible element (513) being higher in the second mode than in the first mode.

13. A structure (4, 5, 6) for transferring loads between a gas turbine engine (1) and an airframe (2), the structure comprising a mounting element according to any one of the claims 1-12, the structure further comprising an auxiliary load transferring element (51') adapted to provide in the second mode a further load path for transferring loads between the gas turbine engine (1) and the airframe (2).

14. An aircraft comprising a mounting element according to any of the claims 1-12.

## Patentansprüche

1. Montageelement (51) zum Übertragen von Lasten zwischen einem Gasturbinenmotor (1) und einer Flugzeugzelle (2), wobei das Montageelement (51) ein zylindrisches Loch (511) zur Aufnahme eines Befestigungselements, beispielsweise eines Stifts oder eines Bolzens, bereithält, **dadurch gekennzeichnet, dass** es ein das Loch (511) umgebendes Deformationselement (513) umfasst, und dass es ausgeführt ist, um in einem ersten Modus zu arbeiten sowie bei einer Deformation des Deformationselements (513) in einem zweiten Modus zu arbeiten, in dem die Steifigkeit des Montageelements (51) niedriger als im ersten Modus ist, so dass reaktive Kräfte im Gasturbinenmotor im zweiten Modus geringer sind.

2. Montageelement nach Anspruch 1, das einen das Deformationselement (513) umgebenden festen Abschnitt (514) umfasst.

3. Montageelement nach einem der Ansprüche 1 bis 2, das ein das Loch (511) umgebendes steifigkeitsreduziertes Element (512) umfasst, das ausgeführt ist, um einen Lastweg im zweiten Modus bereitzustellen.

4. Montageelement nach Anspruch 3, bei dem das steifigkeitsreduzierte Element (512) angrenzend an das Deformationselement (513) oder in dessen Nähe vorgesehen ist.

5. Montageelement nach einem der Ansprüche 3 bis 4, das einen das Deformationselement (513) und das steifigkeitsreduzierte Element (512) umgebenden festen Abschnitt (514) umfasst.

6. Montageelement nach einem der vorstehend aufgeführten Ansprüche, bei dem das Deformationselement (513) einen Lastweg im zweiten Modus bereitstellt, wobei die Steifigkeit des Deformationselements (513) im zweiten Modus niedriger als im ersten Modus ist.

7. Montageelement nach Anspruch 6, bei dem das Deformationselement (513) ausgeführt ist, um mindestens teilweise zu zerfallen.

8. Montageelement nach Anspruch 7, bei dem das Deformationselement (513) ein sprödes Material umfasst.

9. Montageelement (51) zum Übertragen von Lasten zwischen einem Gasturbinenmotor (1) und einer Flugzeugzelle (2), wobei das Montageelement (51) ein zylindrisches Loch (511) zur Aufnahme eines Befestigungselements, beispielsweise eines Stifts oder eines Bolzens, bereithält, **dadurch gekennzeichnet, dass** es ein das Loch (511) umgebendes Deformationselement (513) umfasst, und dass es ausgeführt ist, in einem ersten Modus zu arbeiten sowie bei einer Deformation des Deformationselements (513) in einem zweiten Modus zu arbeiten, in dem das Energieabsorptionsvermögen des Montageelements (51) höher als im ersten Modus ist, so dass die Lasten in der Flugzeugzelle im zweiten Modus geringer sind.

10. Montageelement nach Anspruch 9, das einen das Deformationselement (513) umgebenden festen Abschnitt (514) umfasst.

11. Montageelement nach einem der Ansprüche 9 bis 10, das ein das Loch (511) umgebendes Energieabsorptionselement (512) umfasst, und das ausgeführt ist, um einen Lastweg im zweiten Modus bereitzustellen.

12. Montageelement nach einem der Ansprüche 9 bis 11, bei dem das Deformationselement (513) einen Lastweg im zweiten Modus bereitstellt, wobei das Energieabsorptionsvermögen des Deformationselements (513) im zweiten Modus höher als im ersten Modus ist.

13. Struktur (4, 5, 6) zum Übertragen von Lasten zwischen einem Gasturbinenmotor (1) und einer Flugzeugzelle (2), bei dem die Struktur ein Montageelement nach einem der Ansprüche 1 bis 12 umfasst, wobei die Struktur weiterhin ein Hilfslastübertragungselement (51') umfasst, das ausgeführt ist, um im zweiten Modus einen weiteren Lastweg zum Übertragen von Lasten zwischen dem Gasturbinenmotor (1) und der Flugzeugzelle (2) bereitzustellen.

14. Flugzeug, das ein Montageelement nach einem der Ansprüche 1 bis 12 umfasst.

## Revendications

1. Elément (51) de montage destiné à transférer des charges entre un moteur (1) à turbine à gaz et une cellule (2), l'élément (51) de montage présentant un trou cylindrique (511) destiné à recevoir un élément de fixation, comme une goupille ou un boulon, **caractérisé en ce qu'**il comporte un élément compressible (513) entourant le trou (511) et **en ce qu'**il est prévu pour fonctionner dans un premier mode et pour fonctionner, suite à un écrasement de l'élément compressible (513), dans un deuxième mode dans lequel la rigidité de l'élément (51) de montage est plus faible que dans le premier mode, de telle façon que des efforts de réaction dans le moteur à turbine à gaz soient réduits dans le deuxième mode.

2. Elément de montage selon la revendication 1, comportant une partie pleine (514) entourant l'élément compressible (513).

3. Elément de montage selon l'une quelconque des revendications 1 à 2, comportant un élément (512) à rigidité réduite entourant le trou (511) et étant prévu pour constituer un cheminement d'efforts dans le deuxième mode.

4. Elément de montage selon la revendication 3, l'élément (512) à rigidité réduite étant placé à côté ou au voisinage de l'élément compressible (513).

5. Elément de montage selon l'une quelconque des revendications 3 à 4, comportant une partie pleine (514) entourant l'élément compressible (513) et l'élément (512) à rigidité réduite.

6. Elément de montage selon l'une quelconque des revendications précédentes, l'élément compressible (513) constituant un cheminement d'efforts dans le deuxième mode, la rigidité de l'élément compressible (513) étant plus faible dans le deuxième mode que dans le premier mode.

7. Elément de montage selon la revendication 6, l'élément compressible (513) étant prévu pour se désintégrer au moins partiellement.

8. Elément de montage selon la revendication 7, l'élément compressible (513) comportant un matériau friable.

9. Elément (51) de montage destiné à transférer des charges entre un moteur (1) à turbine à gaz et une cellule (2), l'élément (51) de montage présentant un trou cylindrique (511) destiné à recevoir un élément de fixation, comme une goupille ou un boulon, **caractérisé en ce qu'**il comporte un élément compressible (513) entourant le trou (511) et **en ce qu'**il est prévu pour fonctionner dans un premier mode et pour fonctionner, suite à un écrasement de l'élément compressible (513), dans un deuxième mode dans lequel la capacité d'absorption d'énergie de l'élément (51) de montage est plus élevée que dans le premier mode, de telle façon que les charges dans la cellule soient réduites dans le deuxième mode.

10. Elément de montage selon la revendication 9, comportant une partie pleine (514) entourant l'élément compressible (513).

11. Elément de montage selon l'une quelconque des revendications 9 à 10, comportant un élément (512) d'absorption d'énergie entourant le trou (511) et étant prévu pour constituer un cheminement d'efforts dans le deuxième mode.

12. Elément de montage selon l'une quelconque des revendications 9 à 11, l'élément compressible (513) constituant un cheminement d'efforts dans le deuxième mode, la capacité d'absorption d'énergie de l'élément compressible (513) étant plus élevée dans le deuxième mode que dans le premier mode.

13. Structure (4, 5, 6) destinée à transférer des charges entre un moteur (1) à turbine à gaz et une cellule (2), la structure comportant un élément de montage selon l'une quelconque des revendications 1 à 12, la structure comportant en outre un élément auxiliaire (51') de transfert de charges prévu pour constituer dans le deuxième mode un cheminement supplémentaire d'efforts servant à transférer des charges entre le moteur (1) à turbine à gaz et la cellule (2).

14. Aéronef comportant un élément de montage selon l'une quelconque des revendications 1 à 12.
